(19) Europäisches Patentamt
European Patent Office
Office européen des brevets

(11) EP 1 972 963 A1

(12) **EUROPÄISCHE PATENTANMELDUNG**

(43) Veröffentlichungstag:
24.09.2008 Patentblatt 2008/39

(51) Int Cl.:
*G01V 1/02* *(2006.01)*

(21) Anmeldenummer: 08001224.8

(22) Anmeldetag: 23.01.2008

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **20.03.2007 DE 102007013413**

(71) Anmelder: **GeoForschungsZentrum Potsdam**
**14473 Postdam (DE)**

(72) Erfinder:
• **Borm, Günter**
**76227 Karlsruhe (DE)**

• **Krüger, Kay**
**14469 Potsdam (DE)**
• **Mikulla, Stefan**
**14822 Planebruch (DE)**
• **Barth, Maik**
**14480 Potsdam (DE)**
• **Mielitz, Sylvio**
**14478 Potsdam (DE)**

(74) Vertreter: **Beier, Ralph**
**v. Bezold & Partner**
**Patentanwälte**
**Akademiestrasse 7**
**80799 München (DE)**

(54) **Seismische Quelle mit adaptiver Regelung und entsprechendes Verfahren**

(57) Die Erfindung betrifft eine seismische Quelle zur Einkopplung von breitbandigen seismischen Schwingungen in einen Untergrund (2), mit einem Schwingungsgenerator (1) zur Erzeugung der einzukoppelnden Schwingungen und einem Regler (3), der ausgangsseitig mit dem Schwingungsgenerator (1) verbunden ist und eine Schwingungsgröße der eingekoppelten Schwingungen regelt. Es wird vorgeschlagen, dass als Regler (3) ein adaptiver Regler (3) eingesetzt wird. Weiterhin umfasst die Erfindung ein entsprechendes Verfahren.

Fig. 1

EP 1 972 963 A1

**Beschreibung**

Die Erfindung betrifft eine seismische Quelle zur Einkopplung von breitbandigen seismischen Schwingungen in einen Untergrund und ein entsprechendes Verfahren gemäß den nebengeordneten Ansprüchen.

Zum Stand der Technik gehören seit längerem ingenieursseismologische Untersuchungen, bei denen mit einem magnetostriktiven Aktuator breitbandige seismische Schwingungen erzeugt und in den Untergrund eingekoppelt werden. Hierbei wird in einem sogenannten "Sweep" ein Frequenzbereich von beispielsweise 100Hz bis 6100Hz geregelt durchfahren, wobei die seismischen Schwingungen am Ort der Einkopplung in den Untergrund eine Beschleunigung mit einer vorgegebenen Hüllkurve zeigen sollen, die den Verlauf der Beschleunigung über der Frequenz angibt. Hierbei wird ein rampenförmiger Verlauf der Hüllkurve angestrebt, so dass die Beschleunigung über der Frequenz rampenförmig ansteigt. Dieser rampenförmige Anstieg der Beschleunigung über der Frequenz ist sinnvoll, weil für den Aktuator mit zunehmender Frequenz immer weniger Zeit für die gewünschte Auslenkung bleibt, so dass die zunehmende Beschleunigung die abnehmende Periodendauer kompensiert.

Nachteilig an der bekannten Regelung des Schwingungsgenerators ist jedoch die Tatsache, dass sich die gewünschte rampenförmige Hüllkurve der Beschleunigung über der Frequenz in der Praxis nicht realisieren lässt.

Der Erfindung liegt deshalb die Aufgabe zugrunde, die vorstehend beschriebenen bekannten seismischen Quellen entsprechend zu verbessern.

Diese Aufgabe wird durch eine erfindungsgemäße seismische Quelle und ein entsprechendes Verfahren gemäß den nebengeordneten Ansprüchen gelöst.

Die Erfindung beruht auf der technisch-physikalischen Erkenntnis, dass das aus dem Schwingungsgenerator und dem Untergrund bestehende System ausgeprägte Resonanzbereiche und ein teilweise nicht-lineares Verhalten zeigt, was die Regelung des Schwingungsgenerators und die Einhaltung der gewünschten Hüllkurve der Beschleunigung über der Frequenz erschwert.

Die Erfindung umfasst deshalb die allgemeine technische Lehre, zur Regelung des Schwingungsgenerators einen adaptiven Regler einzusetzen, der sich im Betrieb an das Systemverhalten des aus dem Schwingungsgenerator und dem Untergrund bestehenden Systems so anpasst, dass die eingekoppelten seismischen Schwingungen am Einkopplungsort die gewünschte Hüllkurve der Beschleunigung über der Frequenz zeigen.

In dem bevorzugten Ausführungsbeispiel der Erfindung weist die erfindungsgemäße seismische Quelle einen Frequenzgenerator auf, der ausgangsseitig mit dem adaptiven Regler verbunden ist und dem Regler ein frequenzvariables Frequenzsignal zuführt, wie es auch beim Stand der Technik der Fall ist. Der Frequenzgenerator durchfährt hierbei vorzugsweise einen Frequenzbereich mit einer bestimmten Bandbreite, die beispielsweise größer als 1kHz, 2kHz, 3kHz, 4kHz oder sogar größer als 5kHz sein kann. In einem Ausführungsbeispiel liegt die Bandbreite des erzeugten Frequenzsignals zwischen 100Hz und 6100Hz, jedoch ist die Erfindung hinsichtlich der Bandbreite nicht auf die vorstehend genannten Werte beschränkt.

Weiterhin weist die erfindungsgemäße seismische Quelle vorzugsweise einen Hüllkurvengenerator aus, der ausgangsseitig mit dem adaptiven Regler verbunden ist und ein Hüllkurvensignal erzeugt, das dem adaptiven Regler als Soll-Wert zugeführt wird, wobei das Hüllkurvensignal den gewünschten Verlauf der Beschleunigung der eingekoppelten mechanischen Schwingungen über der Frequenz der Schwingungen angibt. Beispielsweise kann der Hüllkurvengenerator einen rampenförmigen Verlauf der Beschleunigung über der Frequenz als Soll-Wert vorgeben, wie es auch bei dem eingangs erwähnten Stand der Technik der Fall ist.

In dem bevorzugten Ausführungsbeispiel der Erfindung weist der adaptive Regler ein Filter auf, das aus dem Frequenzsignal gemäß einer vorgegebenen, adaptierbaren Übertragungsfunktion ein Reglerausgangssignal zur Ansteuerung des Schwingungsgenerators erzeugt. Die Ansteuerung des Schwingungsgenerators durch den adaptiven Regler erfolgt hierbei vorzugsweise unter Zwischenschaltung eines Digital/Analog-Wandlers und einer Treiberschaltung, die im Falle eines magnetostriktiven Aktuators beispielsweise einen Verstärker und einen Transformator umfassen kann.

Der erfindungsgemäße adaptive Regler ist also vorzugsweise ein digitaler Regler. Die Erfindung ist jedoch hinsichtlich des adaptiven Reglers nicht auf digitale Regler beschränkt, sondern grundsätzlich auch mit analog arbeitenden adaptierbaren Reglern realisierbar.

Vorzugsweise ist das adaptierbare Filter in dem adaptierbaren Regler ein FIR-Filter (FIR: Finite Impulse Response), wie er an sich aus dem Stand der Technik beschrieben ist. Vorzugsweise kommt hierbei ein FIR-Filter zweiter Ordnung zum Einsatz, das zwei adaptierbare Filterkoeffizienten aufweist, da FIR-Filter höherer Ordnung zuviel Rechenzeit benötigen.

In dem bevorzugten Ausführungsbeispiel der Erfindung weist die seismische Quelle einen Sensor auf, um einen Ist-Wert der geregelten Schwingungsgröße zu messen, wobei es sich vorzugsweise um die Beschleunigung der eingekoppelten Schwingungen am Einkopplungsort handelt.

Darüber hinaus weist die erfindungsgemäße seismische Quelle in dem bevorzugten Ausführungsbeispiel der Erfindung einen Hüllkurvenabtaster ("Fast Envelope Sampler") auf, der eingangsseitig mit dem Sensor verbunden ist und einen Ist-Wert der Hüllkurve der gemessenen Schwingungsgröße über der Frequenz ermittelt.

Weiterhin weist die erfindungsgemäße seismische Quelle in dem bevorzugten Ausführungsbeispiel eine Recheneinheit auf, die aus dem Soll-Wert der Hüllkurve und aus dem Ist-Wert der Hüllkurve eine Regelabweichung berechnet.

Die Regelabweichung wird dann einer Adaptionseinheit zugeführt, die aus der Regelabweichung die adaptierte Übertragungsfunktion bzw. die adaptierten Filterkoeffizienten des Filters berechnet.

Vorzugsweise erfolgt die Adaption der Übertragungsfunktion des adaptiven Filters entsprechend dem LMS-Algorithmus (LMS: Least Mean Squares) oder gemäß dem RLS-Algorithmus (RLS: Recursive Least Squares), wobei diese Algorithmen an sich bekannt sind und deshalb nicht näher beschrieben werden müssen.

Ferner ist zu erwähnen, dass die erfindungsgemäße seismische Quelle als Schwingungsgenerator vorzugsweise einen magnetostriktiven Wandler aufweist. Die Erfindung ist jedoch hinsichtlich des Typs des Schwingungsgenerators nicht auf magnetostriktive Wandler beschränkt, sondern grundsätzlich auch mit anderen Wandlertypen realisierbar.

Ferner ist noch zu erwähnen, dass die eingekoppelten seismischen Schwingungen Beschleunigungen von mehr als 1g, 5g, 50g, 100g, 200g oder sogar 300g aufweisen können.

Schließlich umfasst die Erfindung auch ein entsprechendes Verfahren zum Einkoppeln breitbandiger seismischer Schwingungen in einen Untergrund, wie sich bereits aus der vorstehenden Beschreibung ergibt.

Darüber hinaus umfasst die Erfindung auch die neuartige Verwendung einer adaptiven Regelung zur Regelung eines Schwingungsgenerators beim Einkoppeln breitbandiger seismischer Schwingungen in einen Untergrund.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:

Figur 1 ein vereinfachtes Blockschaltbild einer erfindungsgemäßen seismischen Quelle,

Figur 2A die Hüllkurve eines sogenannten "Sweep" der seismischen Quelle gemäß Figur 1 mit dem Verlauf der Beschleunigung über der Frequenz, sowie

Figur 2B eine Hüllkurve der Aktorsteuerspannung y(t) der seismischen Quelle gemäß Figur 1.

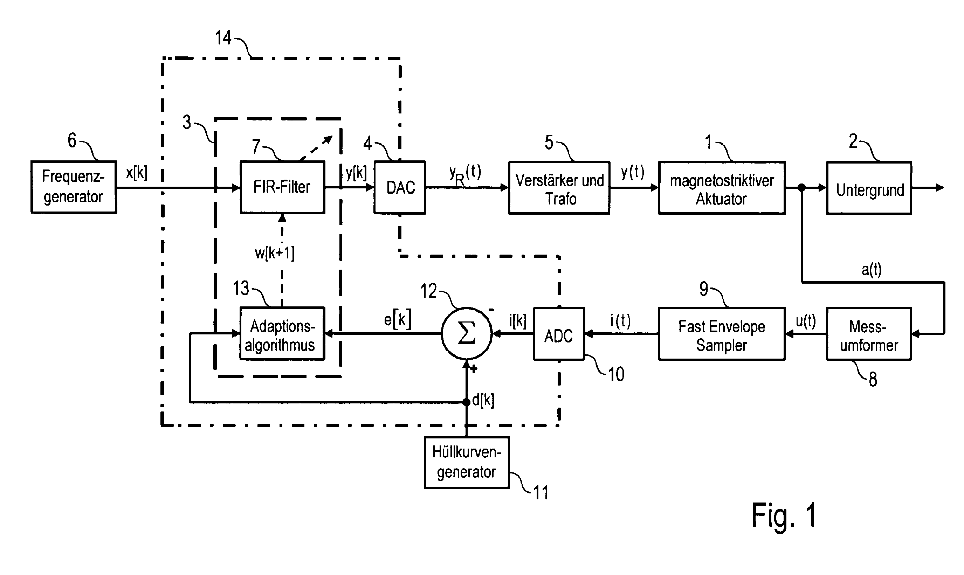

Figur 1 zeigt ein vereinfachtes Blockschaltbild einer erfindungsgemäßen seismischen Quelle mit einem Schwingungsgenerator 1 in Form eines magnetostriktiven Aktuators zur Einkopplung von breitbandigen seismischen Schwingungen in einen Untergrund 2, wobei es sich beispielsweise um eine Tunnelwand oder das Erdreich handeln kann.

Der Schwingungsgenerator 1 erzeugt hierbei in dem Untergrund 2 seismische Schwingungen mit einer Beschleunigung a(t), wobei die Amplitude der Beschleunigung a(t) von der jeweiligen Ankopplung zwischen dem Schwingungsgenerator 1 und dem Untergrund 2 sowie den Materialeigenschaften des Untergrunds 2 abhängt und deshalb sehr starken Schwankungen unterliegt.

Die erfindungsgemäße seismische Quelle weist deshalb einen digitalen adaptierbaren Regler 3 auf, der den Schwingungsgenerator 1 über einen Digital/Analog-Wandler 4 und eine Treiberstufe 5 ansteuert und im Rahmen der adaptiven Regelung Amplitudenschwankungen am Einkopplungsort ausgleicht, wie noch detailliert beschrieben wird.

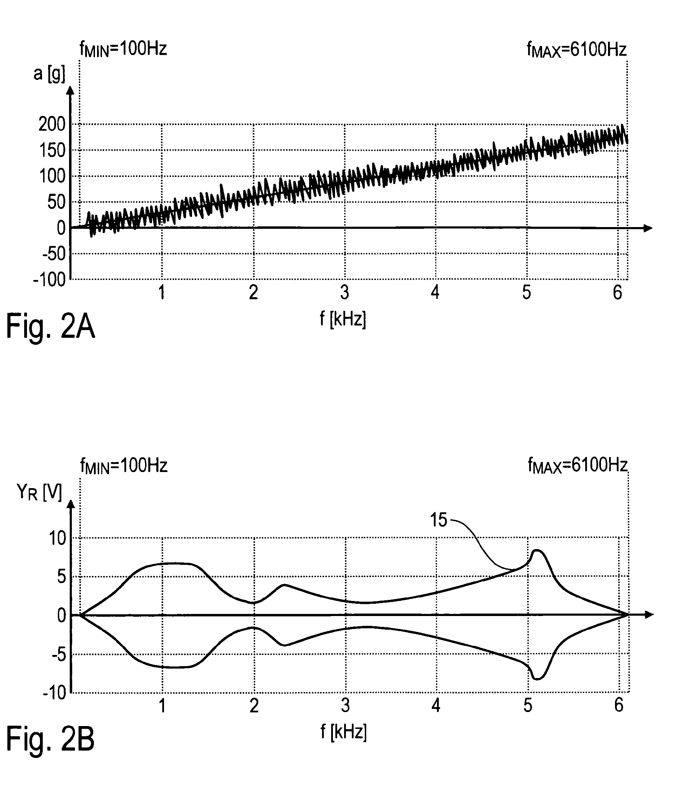

Eingangsseitig ist der adaptive Regler 3 mit einem Frequenzgenerator 6 verbunden, der ein digitales Frequenzsignal x[k] erzeugt, wobei das Frequenzsignal x[k] ein sogenannter "Sweep" ist und somit eine ansteigende Frequenz zwischen 100Hz und 6100Hz aufweist, wie aus Figur 2A ersichtlich ist.

Der adaptive Regler 3 weist ein FIR-Filter 7 zweiter Ordnung auf, das entsprechend einer vorgegebenen Übertragungsfunktion w[k] ein digitales Reglerausgangssignal y[k] berechnet, das von dem Digital/Analog-Wandler 4 in ein analoges Reglerausgangssignal $y_R$(t) umgewandelt wird. Die Treiberstufe 5 steuert den Schwingungsgenerator 1 dann mit einer entsprechenden analogen Aktorsteuerspannung y(t) an.

Weiterhin weist die erfindungsgemäße seismische Quelle eine Rückkopplungsschleife auf, in der zunächst ein Sensor 8 die Beschleunigung a(t) der in den Untergrund 2 eingekoppelten seismischen Schwingungen am Einkopplungsort misst und in ein entsprechendes Spannungssignal u(t) umwandelt.

Aus diesem Spannungssignal u(t) berechnet dann ein Hüllkurvenabtaster 9 die Hüllkurve i(t) der Beschleunigung a(t) der in den Untergrund 2 eingekoppelten Schwingungen.

Die tatsächliche Hüllkurve i(t) wird dann einem Analog/Digital-Wandler 10 zugeführt, der das analoge Hüllkurvensignal i(t) in ein entsprechendes digitales Hüllkurvensignal i[k] umwandelt.

Weiterhin weist die erfindungsgemäße seismische Quelle einen Hüllkurvengenerator 11 auf, der eine gewünschte Hüllkurve d[k] erzeugt und einer Recheneinheit 12 zuführt, die aus dem Soll-Wert d[k] der Hüllkurve und dem zuvor gemessenen Ist-Wert i[k] der Hüllkurve eine Regelabweichung e[k]=d[k]-i[k] berechnet und einer Adaptionseinheit 13 in dem adaptiven Regler 3 zuführt. Die Adaptionseinheit 13 adaptiert dann die Übertragungsfunktion w[k] des FIR-Filters 7 entsprechend einem bestimmten Adaptionsalgorithmus.

In einer Variante der Erfindung erfolgt die Adaption gemäß dem an sich bekannten LMS-Algorithmus nach folgenden Formeln, wobei die Sterne Multiplikationen wiedergeben:

$$\text{Reglerausgangswert:}$$

$$y[k] = \underline{w}^t[k] * \underline{x}[k]$$

$$\text{Regeldifferenz:}$$

$$e[k] = d[k] - i[k]$$

$$\text{Adaptionsschritt:}$$

$$\underline{w}[k+1] = \underline{w}[k] + \mu * e[k] * d[k]$$

In einer anderen Variante der Erfindung erfolgt die Adaption dagegen entsprechend dem ebenfalls an sich bekannten RLS-Algorithmus nach folgenden Formeln:

$$\text{Reglerausgangswert:}$$

$$y[k] = \underline{w}^t[k-1] * \underline{x}[k]$$

$$\text{Regeldifferenz:}$$

$$e[k] = d[k] - i[k]$$

$$\text{Hilfsvektor:}$$

$$\underline{u}[k] = \frac{1}{\rho} * R[k-1] * \underline{x}[k]$$

$$\text{Verstärkungsvektor:}$$

$$\underline{g}[k] = \frac{\underline{u}[k]}{1 + (\underline{u}[k] * \underline{x}[k])}$$

$$\text{Adaptionsschritt:}$$

$$\underline{w}[k] = \underline{w}[k-1] + (\underline{g}[k] * e[k])$$

Autokorrelationsmatrix:

$$R[k] = \frac{1}{\rho} * (R[k-1] - g[k] * \underline{u}^t[k])$$

Ferner ist noch zu erwähnen, dass die erfinderische seismische Quelle in diesem Ausführungsbeispiel einen Digitalteil 14 umfasst, der den adaptiven Regler 3 und die Recheneinheit 12 einschließt, wohingegen die anderen Teile der seismischen Quelle analog arbeiten.

Figur 2A zeigt einen sogenannten "Sweep" der seismischen Quelle gemäß Figur 1, wobei ein Frequenzbereich von 100Hz bis 6100kHz von dem Schwingungsgenerator 1 durchfahren wird.

Aus dieser Darstellung ist ersichtlich, dass die erfindungsgemäße adaptive Regelung den Vorteil hat, dass die Amplitude der Beschleunigung einen rampenförmigen Verlauf über der Frequenz aufweist, was dem gewünschten Verlauf entspricht.

Figur 2B zeigt schließlich eine Hüllkurve 15 des analogen Reglerausgangssignals $y_R(t)$ über der Frequenz.

Die Erfindung ist nicht auf das vorstehend beschriebene bevorzugte Ausführungsbeispiel beschränkt. Vielmehr ist eine Vielzahl von Varianten und Abwandlungen möglich, die ebenfalls von dem Erfindungsgedanken Gebrauch machen und deshalb in den Schutzbereich fallen.

Bezugszeichenliste:

1  Schwingungsgenerator
2  Untergrund
3  Adaptiver Regler
4  Digital/Analog-Wandler
5  Treiberstufe
6  Frequenzgenerator
7  FIR-Filter
8  Sensor
9  Hüllkurvenabtaster
10  Analog/Digital-Wandler
11  Hüllkurvengenerator
12  Recheneinheit
13  Adaptionseinheit
14  Digitalteil
15  Hüllkurve

**Patentansprüche**

1. Seismische Quelle zur Einkopplung von breitbandigen seismischen Schwingungen in einen Untergrund (2), mit

   a) einem Schwingungsgenerator (1) zur Erzeugung der einzukoppelnden Schwingungen und
   b) einem Regler (3), der ausgangsseitig mit dem Schwingungsgenerator (1) verbunden ist und eine Schwingungsgröße der eingekoppelten Schwingungen regelt,

   **dadurch gekennzeichnet, dass**

   c) der Regler (3) ein adaptiver Regler (3) ist.

2. Seismische Quelle nach Anspruch 1, **gekennzeichnet durch** einen Frequenzgenerator (6), der ausgangsseitig mit dem adaptiven Regler (3) verbunden ist und dem Regler (3) ein frequenzvariables Frequenzsignal (x[k]) zuführt.

3. Seismische Quelle nach Anspruch 2, **dadurch gekennzeichnet, dass** der Frequenzgenerator (6) einen Frequenzbereich mit einer bestimmten Bandbreite durchfährt.

4. Seismische Quelle nach Anspruch 3, **dadurch gekennzeichnet, dass** die Bandbreite größer als 1kHz, 2kHz, 3kHz, 4kHz oder größer als 5kHz ist.

5. Seismische Quelle nach einem der vorhergehenden Ansprüche, **gekennzeichnet durch** einen Hüllkurvengenerator (11), der ausgangsseitig mit dem adaptiven Regler (3) verbunden ist und ein Hüllkurvensignal (d[k]) erzeugt, das dem adaptiven Regler (3) als Soll-Wert zugeführt wird, wobei das Hüllkurvensignal (d[k]) den Verlauf der Beschleunigung der Schwingungen über der Frequenz der Schwingungen angibt.

6. Seismische Quelle nach Anspruch 5, **dadurch gekennzeichnet, dass** der Verlauf der Beschleunigung über der Frequenz rampenförmig ist.

7. Seismische Quelle nach einem der vorhergehenden Ansprüche, **dadurch gekennzeichnet, dass** der adaptive Regler (3) ein Filter (7) aufweist, das aus dem Frequenzsignal gemäß einer vorgegebenen adaptierbaren Übertragungsfunktion (w[k]) ein Reglerausgangssignal (y[k]) zur Ansteuerung des Schwingungsgenerators (1) erzeugt.

8. Seismische Quelle nach Anspruch 7, **dadurch gekennzeichnet, dass** das Filter (7) ein FIR-Filter ist, insbesondere ein FIR-Filter zweiter Ordnung, und adaptierbare Filterkoeffizienten aufweist.

9. Seismische Quelle nach einem der Ansprüche 7 bis 8, **gekennzeichnet durch**

   a) einen Sensor (8) zur Erfassung eines Ist-Werts der geregelten Schwingungsgröße, insbesondere der Beschleunigung, der eingekoppelten Schwingungen am Einkopplungsort,
   b) einen Hüllkurvenabtaster (9), der eingangsseitig mit dem Sensor (8) verbunden ist und einen Ist-Wert der Hüllkurve der gemessenen Schwingungsgröße ermittelt,
   c) eine Recheneinheit (10), die aus dem Soll-Wert der Hüllkurve und aus dem Ist-Wert der Hüllkurve eine Regelabweichung (e[k]) berechnet, und
   d) eine Adaptionseinheit (13), die aus der Regelabweichung (e[k]) die adaptierte Übertragungsfunktion bzw. die adaptierten Filterkoeffizienten des Filters (7) berechnet.

10. Seismische Quelle nach Anspruch 9, **dadurch gekennzeichnet, dass** die Adaptionseinheit (13) die Übertragungsfunktion (w[k]) gemäß dem LMS-Algorithmus oder dem RLS-Algorithmus adaptiert.

11. Seismische Quelle nach einem der vorhergehenden Ansprüche, **dadurch gekennzeichnet, dass** der Schwingungsgenerator (1) ein magnetostriktiver Wandler ist.

12. Seismische Quelle nach einem der vorhergehenden Ansprüche, **dadurch gekennzeichnet, dass** die eingekoppelten mechanischen Schwingungen eine Beschleunigung von mehr als 1g, 5g, 50g, 100g, 200g oder 300g aufweisen.

13. Verfahren zum Einkoppeln breitbandiger seismischer Schwingungen in einen Untergrund (2) mit den folgenden Schritten:

   a) Erzeugung der einzukoppelnden Schwingungen mittels eines Schwingungsgenerators (1),
   b) Einkoppeln der Schwingungen in den Untergrund (2),
   c) Regelung einer Schwingungsgröße (a) der eingekoppelten Schwingungen,

   **dadurch gekennzeichnet, dass**

   d) die Regelung während des Einkoppelns der Schwingungen adaptiert wird.

14. Verfahren nach Anspruch 13, **gekennzeichnet durch** die folgenden Schritte:

   a) Erzeugung eines frequenzvariablen Frequenzsignals (x[k]) mittels eines Frequenzgenerators,
   b) Filterung des frequenzvariablen Frequenzsignals (x[k]) in dem Regler (3) mittels eines Filters (7) gemäß einer bestimmten Filtercharakteristik (w[k]) zur Bestimmung eines Reglerausgangsgröße (y[k]),
   c) Ansteuerung des Schwingungsgenerators (1) mit der Reglerausgangsgröße (y[k]),
   d) Ermittlung einer Regelabweichung (e[k]) der zu regelnden Schwingungsgröße,
   e) Adaption der Filtercharakteristik (w[k]) entsprechend der Regelabweichung (e[k]).

15. Verfahren nach Anspruch 14, **gekennzeichnet durch** die folgenden Schritte:

a) Vorgabe eines Soll-Werts (d[k]) einer Hüllkurve, die den gewünschten Verlauf der zu regelnden Schwingungsgröße (a) über der Frequenz angibt,
b) Messung der zu regelnden Schwingungsgröße (a) mittels eines Sensors (8),
c) Ermittlung eines Ist-Werts (i[k]) der Hüllkurve der gemessenen Schwingungsgröße,
d) Ermittlung einer Regelabweichung (e[k]) aus dem Soll-Wert (d[k]) und dem Ist-Wert (i[k]),
e) Adaption der Filtercharakteristik (w[k]) des Filters (7) des adaptiven Reglers (3) in Abhängigkeit von der Regelabweichung (e[k]).

16. Verfahren nach Anspruch 15, **dadurch gekennzeichnet, dass** die Adaption der Filtercharakteristik (w[k]) gemäß dem LMS-Algorithmus oder dem RLS-Algorithmus erfolgt.

17. Verwendung eines adaptiven Reglers (3) zur Regelung von breitbandigen seismischen Schwingungen, die in einen Untergrund (2) eingekoppelt werden.

Fig. 1

EP 1 972 963 A1

Fig. 2A

Fig. 2B

**Europäisches Patentamt**

# EUROPÄISCHER RECHERCHENBERICHT

Nummer der Anmeldung

EP 08 00 1224

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 670 863 A (SALLAS JOHN J [US] ET AL) 2. Juni 1987 (1987-06-02) <br> * Spalte 1, Zeile 8 - Zeile 58 * <br> * Spalte 2, Zeile 3 - Zeile 40 * <br> * Spalte 3, Zeile 52 - Spalte 4, Zeile 8 * <br> * Spalte 4, Zeile 52 - Zeile 62 * <br> * Spalte 5, Zeile 7 * <br> * Spalte 8, Zeile 33 - Zeile 45 * <br> * Anspruch 1; Abbildungen 1,2 * <br> ----- | 1-17 | INV. <br> G01V1/02 |
| X | US 4 692 912 A (MUELLER ALLAN H [US] ET AL) 8. September 1987 (1987-09-08) <br> * Spalte 2, Zeile 60 - Zeile 68 * <br> * Spalte 3, Zeile 12 - Zeile 15 * <br> * Spalte 4, Zeile 16 - Zeile 32 * <br> * Ansprüche 1,8; Abbildung 1 * <br> ----- | 1,7,13 | |
| X | US 4 148 375 A (DOWLER WARREN L ET AL) 10. April 1979 (1979-04-10) <br> * Spalte 1, Zeile 35 - Zeile 45 * <br> * Spalte 2, Zeile 63 - Spalte 3, Zeile 20 * <br> * Ansprüche 1,5; Abbildungen 1,2 * <br> ----- | 1-4,17 | RECHERCHIERTE SACHGEBIETE (IPC) <br><br> G01V |
| A | US 5 883 478 A (THESLING WILLIAM HENRY [US]) 16. März 1999 (1999-03-16) <br> * Spalte 2, Zeile 7 - Zeile 18 * <br> * Spalte 3, Zeile 57 - Zeile 66 * <br> * Spalte 4, Zeile 4 - Zeile 18 * <br> * Ansprüche 2,4; Abbildung 1 * <br> ----- | 1-17 | |
| A | GB 2 409 899 A (WESTERNGECO LTD [GB]) 13. Juli 2005 (2005-07-13) <br> * Seite 5, Zeile 19 - Zeile 22 * <br> ----- <br><br> -/-- | 8 | |

Der vorliegende Recherchenbericht wurde für alle Patentansprüche erstellt

| Recherchenort | Abschlußdatum der Recherche | Prüfer |
|---|---|---|
| München | 7. Juli 2008 | Marquart, N |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................
& : Mitglied der gleichen Patentfamilie, übereinstimmendes Dokument

EPO FORM 1503 03.82 (P04C03)

**Europäisches Patentamt**

**EUROPÄISCHER RECHERCHENBERICHT**

Nummer der Anmeldung

EP 08 00 1224

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | WIDROW ET AL: "Adaptive Noise Cancelling: Principles & Applications" EEDINGS OF THE IEEE, IEEE. NEW YORK, US, Bd. 63, Nr. 12, 1. Dezember 1975 (1975-12-01), Seiten 1692-1716, XP002023650 ISSN: 0018-9219 * das ganze Dokument * ----- | 1-17 | |
| A | "FAST ENVELOPE SAMPLER" ELEKTOR ELECTRONICS, ELEKTOR ELECTRONICS, TUNBRIDGE WELLS, GB, Bd. 15, Nr. 169, 1. Juli 1989 (1989-07-01), Seite 14/15, XP000069867 ISSN: 0268-4519 * das ganze Dokument * ----- | 1-17 | |

**RECHERCHIERTE SACHGEBIETE (IPC)**

Der vorliegende Recherchenbericht wurde für alle Patentansprüche erstellt

| Recherchenort | Abschlußdatum der Recherche | Prüfer |
|---|---|---|
| München | 7. Juli 2008 | Marquart, N |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
.....................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 08 00 1224

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-07-2008

| Im Recherchenbericht angeführtes Patentdokument | Datum der Veröffentlichung | Mitglied(er) der Patentfamilie | Datum der Veröffentlichung |
|---|---|---|---|
| US 4670863 A | 02-06-1987 | KEINE | |
| US 4692912 A | 08-09-1987 | KEINE | |
| US 4148375 A | 10-04-1979 | KEINE | |
| US 5883478 A | 16-03-1999 | KEINE | |
| GB 2409899 A | 13-07-2005 | EP 1709465 A1<br>WO 2005066661 A1<br>US 2008033655 A1 | 11-10-2006<br>21-07-2005<br>07-02-2008 |

EPO FORM P0461

Für nähere Einzelheiten zu diesem Anhang : siehe Amtsblatt des Europäischen Patentamts, Nr.12/82